# EUROPEAN PATENT SPECIFICATION

(11) **EP 3 443 772 B1**
(45) Date of publication and mention of the grant of the patent: **08.04.2020**
(21) Application number: 17719821.5
(22) Date of filing: 11.04.2017
(51) Int. Cl.: H04L 5/00, H04W 74/08, H04L 27/00

(54) **METHODS FOR CONTROLLING MEASUREMENTS BASED ON LBT PARAMETERS**
VERFAHREN ZUR STEUERUNG VON MESSUNGEN AUF BASIS VON LBT-PARAMETERN
PROCÉDÉS DE CONTRÔLE DE MESURAGES BASÉS SUR DES PARAMÈTRES LBT

(30) Priority: 11.04.2016 US 201662320952 P
(43) Date of publication of application: 20.02.2019
(73) Proprietor: Telefonaktiebolaget LM Ericsson (publ), 164 83 Stockholm (SE)
(72) Inventor: SIOMINA, Iana, 183 30 Täby (SE); KAZMI, Muhammad, 174 64 Sundbyberg (SE)
(74) Representative: Zacco Sweden AB
(86) International application number: PCT/EP2017/058679
(87) International publication number: WO 2017/178486

(56) References cited:
- PANASONIC: "DRS design for LAA", 3GPP DRAFT; R1-152692, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050972656, Retrieved from the Internet: URL:http://www.3gpp.org/ftp/Meetings_3GPP_ SYNC/RAN1/Docs/ [retrieved on 2015-05-24]
- SAMSUNG: "DRS design and LBT procedure", 3GPP DRAFT; R1-154767 DRS DESIGN AND LBT PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 30 August 2015 (2015-08-30), XP051021041, Retrieved from the Internet: URL:http://www.3gpp.org/ftp/tsg_ran/WG1_RL 1/TSGR1_82/Docs/ [retrieved on 2015-08-30]
- QUALCOMM INCORPORATED: "Required functionality for support of LAA-LTE", 3GPP DRAFT; R2-150517 LAA REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20150209 - 20150213 8 February 2015 (2015-02-08), XP050935763, Retrieved from the Internet: URL:http://www.3gpp.org/ftp/Meetings_3GPP_ SYNC/RAN2/Docs/ [retrieved on 2015-02-08]
- "3rd Generation Partnership Project; Technical Specification Group Radio Access Network; Evolved Universal Terrestrial Radio Access (E-UTRA); Requirements for support of radio resource management (Release 13)", 3GPP STANDARD; 3GPP TS 36.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V13.3.0, 1 April 2016 (2016-04-01), pages 48-363, XP051088524, [retrieved on 2016-04-01] cited in the application

## Description

### TECHNICAL FIELD

The present invention generally relates to wireless communication networks, and particularly relates to performing measurements related to listen-before-talk (LBT).

### BACKGROUND

Long Term Evolution (LTE) specifications have been standardized, by members of the 3^{rd}-Generation Partnership Project (3GPP), and support Component Carrier (CC) bandwidths up to 20 MHz, which is the maximum carrier bandwidth under Release 8 of the LTE specifications. LTE operation with wider bandwidth than 20 MHz is possible, using multiple CCs, appearing as a number of LTE carriers to an LTE terminal. A straightforward way to obtain this would be by means of Carrier Aggregation (CA). The LTE standard supports up to 5 aggregated carriers, where each carrier is limited, according to the 3GPP specifications, to have one of six bandwidths, namely 6, 15, 25, 50, 75 or 100 RB (corresponding to 1.4, 3, 5, 10, 15 and 20 MHz respectively). The number of aggregated CCs as well as the bandwidth of the individual CC may be different for uplink and downlink.

During initial access, an LTE CA-capable terminal behaves similarly to a terminal not capable of CA. Upon successful connection to the network, a terminal may, depending on its own capabilities and the network, be configured with additional CCs in the uplink (UL) and downlink (DL). This configuration is based on Resource Radio Control (RRC) signaling. Due to the heavy signaling and rather slow speed of RRC signaling, it is envisioned that a terminal may be configured with multiple CCs, even when not all of them are currently used.

In CA, the terminal (user equipment or UE) is configured with a primary CC (PCC), a primary cell (PCell) or a primary serving cell (PSC). The PCell is particularly important, e.g., due to control signaling on this cell and UE monitoring of the radio quality on the PCell. A CA-capable terminal can, as explained above, also be configured with additional carriers (or cells or serving cells) which are referred to as secondary CCs (SCC), secondary cells (SCell) or secondary serving cells (SSC). Note that the terms SCC, SSC, and SCell may be used interchangeably, as may the terms PCC, PCell, and PSC.

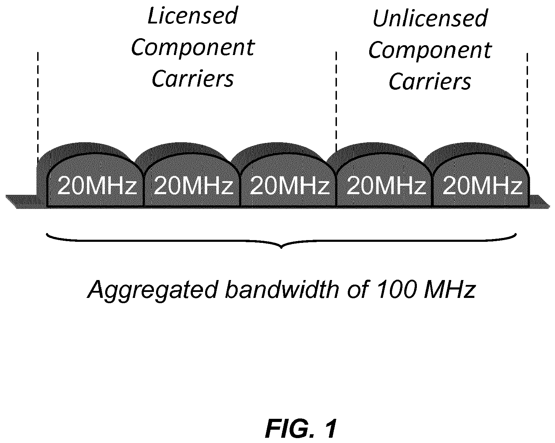

To further improve the performance of LTE systems, CA has been expanded to enable the use of LTE in an unlicensed spectrum. This operation is referred to as Licensed Assisted Access (LAA). As unlicensed spectrum may never match the qualities of licensed spectrum, the intention with LAA is to apply carrier aggregation and use a secondary carrier in an unlicensed band, while having a primary carrier in a licensed band. This will then ensure that the reliability associated with licensed carriers can be enjoyed for the primary carrier and only secondary carriers are used in unlicensed bands. However, operation of unlicensed carrier as standalone operation or CA with a primary carrier in an unlicensed band may also be employed. CA using licensed and unlicensed carriers is shown, for example, in Figure 1.

LAA, or operation based on frame structure 3 (FS3) (specified in 3GPP TS 36.211), which was introduced in LTE Release 13, refers to UE operation on at least one carrier in unlicensed spectrum such as Band 46, which is also used for Wi-Fi access. For example, a UE can be configured with carrier aggregation with PCell in Band 1 (licensed spectrum) and SCell in Band 46 (unlicensed spectrum). A base station, such as an eNodeB or eNB, operating in the unlicensed band only transmits signals which may be used for UE measurements using so called discovery reference symbols (DRS). DRS may comprise of any type of reference signal that can be used by the UE for performing one or more measurements. Examples of DRS are CRS, CSI-RS, PSS, SSS, MBSFN RS, etc. One or more DRS may be transmitted in the same DRS time resource. Examples of DRS time resources are symbols, subframes, slots, etc.

Unlike Release 8 CRS (common reference symbols), DRS is not transmitted in every subframe, and is instead transmitted periodically (e.g., every 160 ms). Moreover, the eNB may perform so called listen before talk (LBT) procedures to check that no other node (such as another eNB or a Wi-Fi access point) is transmitting in the unlicensed spectrum before it transmits DRS. This means that from a UE perspective, the eNB may be unable to transmit any particular DRS transmission. In certain regions, LBT functionality is required from a regulatory point of view to ensure fair coexistence of different radios and access technologies on the unlicensed band.

According to the LBT procedure, the transmitter in unlicensed spectrum (e.g., base station in the case of downlink or the UE in the case of uplink) needs to listen on the carrier before it starts to transmit. If the medium is free, the transmitter can transmit. If the medium is busy, e.g., some other node is transmitting, the transmitter cannot transmit and the transmitter can try again at a later time. Therefore, the LBT procedure enables a clear channel assessment (CCA) check before using the channel. The LBT procedure may also be called a channel carrier sense multiple access (CSMA) scheme, channel assessment scheme, clear channel assessment scheme, etc.

Based on the CCA, if the channel is found to be clear, then LBT is considered to be successful. But if the channel is found to be occupied, then the LBT is considered to have failed (LBT failure). The LBT failure requires the network node not to transmit signals in the same and/or subsequent subframes. The exact subframes and the number of subframes where transmission is forbidden depends on the specific design of an LBT scheme. Due to LBT, a transmission in an unlicensed band may be delayed until the medium becomes free again. In a case where there is no coordination between the transmitting nodes (which often is the case), the delay may appear random.

In the simplest form, LBT is performed periodically with a period equal to certain units of time. As an example, one unit of time duration may be one TTI, one time slot, one subframe, etc. The duration of listening in LBT is typically on the order of a few µsec to tens of µsec. Typically, for LBT purposes, each LTE subframe is divided in two parts: in the first part, the listening takes place and the second part carries data if the channel is seen to be free. The listening occurs at the beginning of the current subframe and determines whether or not data transmission will continue in this subframe and a few next subframes. Hence, the data transmission in a subframe P until subframe P+n is determined by the outcome of listening during the beginning of subframe P. The number n depends on system design and/or regulatory requirements.

In Release 14, uplink operation is being introduced in addition to the existing downlink operation in the unlicensed spectrum. This means that a UE may be configured with uplink transmissions on one or more secondary cells in the unlicensed spectrum and perform uplink LBT if necessary.

As for Dual Connectivity (DC) operation, the UE can be served by at least two nodes called master eNB (MeNB) and secondary eNB (SeNB). More generally, in multiple connectivity (multi-connectivity or MC) operation, the UE can be served by two or more nodes, such as an MeNB, SeNB1, SeNB2 and so on. The UE is configured with a primary component carrier (PCC) from both MeNB and SeNB. The primary cell (PCell) from MeNB and SeNB are called PCell and primary secondary cell (PSCell), respectively. The PCell and PSCell typically operate the UE independently. The UE is also configured with one or more secondary component carriers (SCCs) from each of MeNB and SeNB. The corresponding secondary serving cells served by MeNB and SeNB are called secondary cells (SCells). The UE in DC typically has separate transmission/reception for each of the connections with MeNB and SeNB. This allows the MeNB and SeNB to independently configure each UE with one or more procedures, such as radio link monitoring (RLM), DRX cycle, etc., on its PCell and PSCell, respectively.

An example for CRS-based measurements from 3GPP TS 36.133, v13.3.0 includes:

### 8.11.2 CRS based discovery signal measurements

### 8.11.2.1 E-UTRAN intra-frequency measurements

*NOTE: The requirements in this section are applicable only for measurements on SCCfollowing the frame structure type 3.*

*The UE shall be able to identify new intra-frequency FS3 cells and perform measurements of identified intra-frequency cells without an explicit intra-frequency neighbour cell list containing physical layer cell identities. During the RRC_CONNECTED state the UE shall continuously measure identified intra-frequency cells and additionally search for and identify new intra-frequency cells.*

### 8.11.2.1.1 Requirements

### 8.11.2.1.1.1 Requirements when no DRX is used

*When no DRX is in use the UE shall be able to identify a new detectable FS3 intra-frequency cell within T*_{*identify_intra*_}*_{FS3}, T_{identify_intra_FS3}* = *T_{detect intra_FS3}* + *T*_{*measure intra_FS3*_}*_{CRS}, where:*
*T_{detect intra_FS3} is the intra-frequency period for cell detection as specified in Table 8.11.2.1.1.1-1,*
*T*_{*measure_intra_FS3*_}*_{CRS} is the intra-frequency period for measurements as shown in Table 8.11.2.1.1.1-2,*
*T_{DMTC_periodicity} is the discovery signal measurement timing configuration periodicity of higher layer,*
*L is the number of configured discovery signal occasions which are not available during T_{detect intra_FS3} for cell detection at the UE due to the absence of the necessary radio signals,*
*M is the number of configured discovery signal occasions which are not available during T*_{*measure_intra_FS3*_}*_{CRS} for the measurements at the UE due to the absence of the necessary radio signals.*

**Table 8.11.2.1.1.1-1: Intra-frequency cell detection under operation with frame structure 3**

| ***SCH Ês*/*Iot*** | ***T_{detect intra_FS3}, [ms]*** |
|---|---|
| *[0]* ≤ *SCH Ês*/*Iot* | *([1]*+*L)* ^{∗} *T_{DMTC_periodicity}* |
| *[-6]* ≤ *SCH Ês*/*Iot* < *[0]* | *([4]*+*L)* ^{∗} *T_{DMTC_periodicity}* |

*A cell shall be considered detectable when*
- *RSRP related side conditions given in Section 9.1.18.2 are fulfilled for a corresponding Band,*
- *RSRQ related side conditions given in Section 9.1.18.3 are fulfilled for a corresponding Band,*
- *SCH_RP is according to Annex B.2.12 for a corresponding Band and SCH Ês*/*Iot is according to Table 8.11.2.1.1.1-1.*

*Identification of a cell shall include detection of the cell and additionally performing a single measurement with measurement period of T_{measure_intra_FS3_CRS} when no DRX is used. If higher layer filtering is used, an additional cell identification delay can be expected.*

*In the RRC_CONNECTED state the measurement period for intra-frequency measurements is T*_{*measure_intra_FS3*_}*_{CRS} as shown in Table 8.11.2.1.1.1-2, when no DRX is in use. The UE shall be capable of performing RSRP and RSRQ measurements for 3 identified intra-frequency cells, and the UE physical layer shall be capable of reporting measurements to higher layers within the measurement period of T*_{*measure_intra_FS3*_}*_{CRS}.*

**Table 8.11.2.1.1.1-2: Intra-frequency measurement requirements under operation with frame structure 3**

| ***Measurement bandwidth [RB]*** | ***CRS Ês*/*Iot*** | ***Discovery signal occasion duration (ds-OccasionDuration) [ms]*** | ***T_{measure_intra-FS3_CRS} [ms]*** |
|---|---|---|---|
| ≥ *6* | *[0]* ≤ *CRS Ês*/*Iot* | *1* | *([3]*+*M)* ^{∗} *T_{DMTC_periodicity}* |
| ≥ *6* | *[-6]* ≤ *CRS Ês*/*Iot* < *[0]* | *1* | *([5]*+*M)* ^{∗} *T_{DMTC_periodicity}* |
| ≥ *25* | *[0]* ≤ *CRS Ês*/*Iot* | *1* | *([1]*+*M)* ^{∗} *T_{DMTC_periodicity}* |
| ≥ *25* | *[-6]* ≤ *CRS Ês*/*Iot < [0]* | *1* | *([3]*+*M)* ^{∗} *T_{DMTC_periodicity}* |

*The RSRP measurement accuracy for all measured cells shall be as specified in Section 9.1.18.2, and the RSRQ measurement accuracy for all measured cells shall be as specified in Section 9.1.18.3.*

### 8.11.3 CSI-RS based discovery signal measurements

### 8.11.3.1 E-UTRAN intra-frequency measurements

*The UE shall be able to identify new intra-frequency FS3 TPs and perform CSI-RSRP measurements of intra-frequency TPs with an explicit intra-frequency TP list containing physical layer cell identities. During the RRC_CONNECTED state the UE shall continuously measure identified intra-frequency TPs and additionally search for and identify new intra-frequency TPs.*

### 8.11.3.1.1 Requirements

### 8.11.3.1.1.1 Requirements when no DRX is used

*When no DRX is in use the UE shall be able to identify a new detectable FS3 intra-frequency TP within T_{identify_intra_TP_FS3}.*
*T*_{*identify_intra*_*TP_FS3*} = *T_{identify_intra_FS3}* + *T_{measure_intra_FS3_CSI-RS}, where*
*T*_{*identify*_}*_{intra_FS3} is the intra-frequency period for cell identification in Section 8.11.2.1.1.1,*
*T*_{*measure_intra_FS3*_}*_{CSI-RS} is the intra-frequency period for TP measurement as shown in Table 8.11.3.1.1.1-1,*
*T_{DMTC_periodicity} is the discovery signal measurement timing configuration periodicity of higher layer,*
*M is the number of configured discovery signal occasions which are not available during T*_{*measure_intra_FS3*_}*_{CSI-RS} for the measurements at the UE due to the absence of the necessary radio signals.*

*A TP shall be considered detectable when*
- *CSI-RSRP related side conditions given in Section 9.1.18.4 are fulfilled for a corresponding Band,*
- *SCH_RP is according to Annex B.2.12 for a corresponding Band and SCH Ês*/*Iot is according to Section 8.11.2.1.1.1.*

*Identification of a TP shall include identification of the cell and additionally performing a single measurement on the TP within the measurement period of T*_{*measure_intra_FS3*_}*_{CSI-RS} when no DRX is used. If higher layer filtering is used, an additional TP identification delay can be expected.*

*In the RRC_CONNECTED state the measurement period for intra-frequency measurements is T*_{*measure_intra_FS3*_}*_{CSI-RS} as shown in table 8.11.3.1.1.1-1, when no DRX is in use. The UE shall be capable of performing CSI-RSRP measurements for 3 identified intra-frequency TPs, and the UE physical layer shall be capable of reporting measurements to higher layers with the measurement period of T*_{*measure*_*intra_FS3*_*CSI-RS*}

**Table 8.11.3.1.1.1-1: Intra-frequency TP measurement requirements under operation with frame structure 3**

| ***Measurement bandwidth [RB]*** | ***CSI-RS Ês*/*Iot*** | ***Discovery signal occasion duration (ds-OccasionDuration) [ms]*** | ***T_{measure_intra_FS3_CSI- RS}, [ms]*** |
|---|---|---|---|
| ≥ *6* | *[0]* ≤ *CSI-RS Ês*/*Iot* | *1* | *([3]*+*M)* ^{∗} *T_{DMTC_periodicity}* |
| ≥ *6* | *[-6]* ≤ *CSI-RS Ês*/*Iot* < *[0]* | *1* | *([5]*+*M)* ^{∗} *T_{DMTC_periodicity}* |
| ≥ *25* | *[0]* ≤ *CSI-RS Ês*/*Iot* | *1* | *([1]*+*M)* ^{∗} *T_{DMTC_periodicity}* |
| ≥ *25* | *[-6]* ≤ *CSI-RS Ês*/*Iot* < *[0]* | *1* | *([3]*+*M)* ^{∗} *T_{DMTC_periodicity}* |

*The CSI-RSRP measurement accuracy for all measured TPs shall be as specified in Section 9.1.18.4.*

PANASONIC: "DRS design for LAA", 3GPP DRAFT; R1-152692, 3RD GENERATION PARTNERSHIP PROJECT (3GPP), Mobile Competence Centre, dated May 24, 2015, discloses LAA DRS transmission in combination with LBT.

SAMSUNG: DRS design and LBT procedure", 3GPP DRAFT; R1-154767 DRS DESIGN AND LBT PROCEDURE, 3RD GENERATION PARTNERSHIP PROJECT (3GPP), MOBILE COMPETENCE CENTRE; dated August 30, 2015, discloses different DRS design targets and potential enhancements to support RRM measurements including cell identification on unlicensed carriers.

### SUMMARY

The invention is defined by the independent claims. Furthermore, the embodiments of the invention are those defined by the claims. Moreover, examples, embodiments and descriptions, which are not covered by the claims are presented not as embodiments of the invention, but as background art or examples useful for understanding the invention.

In the current requirements, the measurement period is determined as a function of the number of LBT attempts, or the number of occasions when the signal to be measured is not present. However, the number of attempts is a variable that makes the measurement period increase without limit in the current specification. This has consequences. For example, UE complexity is effected, because the UE has to attempt the measurement sampling and accumulate samples over unlimited time. Network complexity is effected, because the network may be waiting for the measurement during undetermined time. Measurement inaccuracy is another consequence, because the longer the measurement time, the higher the probability that the radio conditions for some samples will change and/or that the UE will move.

To address these problems, various embodiments described herein are directed to controlling how measurements are performed based on LBT-related information, including determining a measurement time based on the LBT-related information.
According to some embodiments, a method, in a wireless device, of performing radio measurements in a wireless system where one or more nodes apply LBT operations when transmitting on at least one carrier, the method comprising: obtaining an LBT-related parameter for radio measurements, wherein the LBT-related parameter comprises one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate; determining a measurement time, based on the obtained LBT-related parameter for radio measurements, wherein the measurement time is determined by calculating the measurement time based on at least one of an applicable LBT parameter value(s); performing a radio measurement within the determined measurement time, to obtain a measurement result; and reporting the measurement result to another node, logging the measurement result and/or using the measurement result for one or more operational tasks in the wireless device. According to some embodiments, a method, in a network node, for controlling a wireless device performing radio measurements in a wireless system where one or more nodes apply LBT operations when transmitting on at least one carrier, the method comprising: obtaining an LBT-related parameter for radio measurements, wherein the LBT-related parameter comprises one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate; and using the obtained LBT-related parameter to perform at least one of: controlling a wireless device measurement time; configuring at least one counter or a timer associated with the measurement; controlling a wireless device measurement configuration; and adapting at least one transmission configuration parameter for transmitting signals to be used by the wireless device for the measurement.

According to some embodiments, a wireless device configured to perform radio measurements in a wireless system where one or more nodes apply LBT operations when transmitting on at least one carrier, the wireless device comprising a processing circuit configured to: obtain an LBT-related parameter for radio measurements, wherein the LBT-related parameter comprises one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate; determine a measurement time, based on the obtained LBT-related parameter for radio measurements, wherein the measurement time is determined by calculating the measurement time based on at least one of an applicable LBT parameter value(s); perform a radio measurement within the determined measurement time, to obtain a measurement result; and report the measurement result to another node, logging the measurement result and/or using the measurement result for one or more operational tasks in the wireless device. According to some embodiments, a network node configured to control a wireless device performing radio measurements in a wireless system where one or more nodes apply LBT operations when transmitting on at least one carrier, the network node comprising a processing circuit configured to: obtain an LBT-related parameter for radio measurements, wherein the LBT-related parameter comprises one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate; and use the obtained LBT-related parameter to perform at least one of: control a wireless device measurement time; configure at least one counter or a timer associated with the measurement; control a wireless device measurement configuration; and adapt at least one transmission configuration parameter for transmitting signals to be used by the wireless device for the measurement.

According to some embodiments methods described above may also be implemented by apparatus, devices, computer readable medium, computer program products and functional implementations.

Of course, the present invention is not limited to the above features and advantages. Those of ordinary skill in the art will recognize additional features and advantages upon reading the following detailed description, and upon viewing the accompanying drawings.

### BRIEF DESCRIPTION OF THE DRAWINGS

Figure 1 is a diagram illustrating carrier aggregation with licensed and unlicensed frequency bands.
Figure 2 is a block diagram of a network node configured to control a wireless device performing measurements, according to some embodiments.
Figure 3 illustrates a method in a network node for controlling a wireless device performing measurements, according to some embodiments.
Figure 4 is a block diagram of a wireless device configured to perform measurements, according to some embodiments.
Figure 5 illustrates a method in a wireless device for performing measurements, according to some embodiments.
Figure 6 is a block diagram illustrating a functional implementation of a network node configured to control a wireless device performing measurements, according to some embodiments.
Figure 7 is a block diagram illustrating a functional implementation of a wireless device configured to perform measurements, according to some embodiments.

### DETAILED DESCRIPTION

Various embodiments described herein relate to performing radio measurements in a wireless system where one or more nodes apply LTB operations when transmitting on at least one carrier. Advantages of the embodiments described herein include the possibility of controlling the measurement time in the presence of LBT. The maximum measurement time (e.g., measurement period) may be well defined even when LBT fails in uplink and/or in downlink during the measurement period. Other advantages include the reduction in the complexity in the node doing measurement on a cell requiring LBT and more efficient reception of measurement reports in the receiving node.

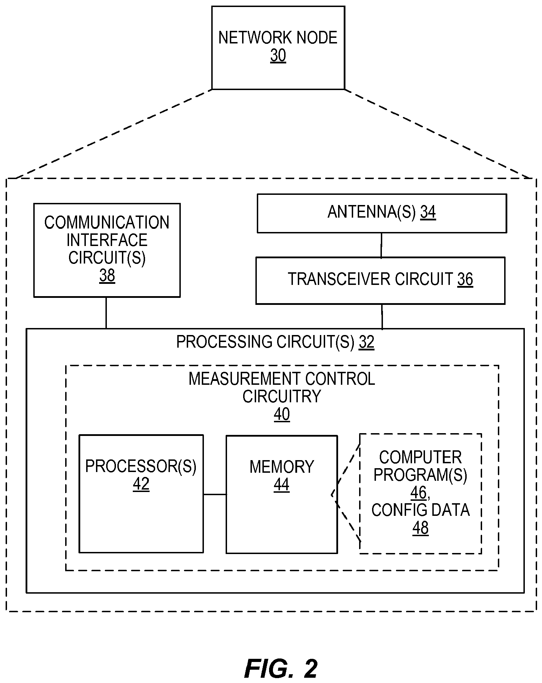

A method for controlling the wireless device performance of the radio measurements is implemented by a network access node, such as network node 30 illustrated in Figure 2, according to some embodiments. The network node 30 facilitates communication between UEs and the core network. The generic terminology "network node" is used, but the network node 30 can be any kind of network node such as a radio network node such as base station, radio base station, base transceiver station, base station controller, network controller, evolved Node B (eNB), Node B, Multi-cell/multicast Coordination Entity (MCE), relay node, access point, radio access point, Remote Radio Unit (RRU) Remote Radio Head (RRH), a core network node (e.g., MME, SON node, a coordinating node, positioning node, MDT node, etc.), or even an external node (e.g., 3rd party node, a node external to the current network), etc. It may also include, in some cases, Operations Support System (OSS), Operations and Maintenance (O&M), Self-Organizing Network (SON), positioning node, Evolved Serving Mobile Location Center (E-SMLC), a centralized controller, a core network node, Mobility Management Entity (MME), base station controller, or network controller.

The network node 30 includes a communication interface circuit 38 that includes circuitry for communicating with other nodes in the core network, radio nodes, and/or other types of nodes in the network for the purposes of providing data and cellular communication services. The network node 30 communicates with UEs via antennas 34 and a transceiver circuit 36. The transceiver circuit 36 may include transmitter circuits, receiver circuits, and associated control circuits that are collectively configured to transmit and receive signals according to a radio access technology, for the purposes of providing cellular communication services. According to various embodiments, cellular communication services may be operated according to any one or more of the 3GPP cellular standards, GSM, general packet radio service (GPRS), wideband code division multiple access (WCDMA), high-speed downlink packet access (HSDPA), LTE and LTE-Advanced.

The network node 30 also includes one or more processing circuits 32 that are operatively associated with the communication interface circuit 38 or transceiver circuit 36. The network node 30 uses the communication interface circuit 38 to communicate with network nodes and the transceiver 36 to communicate with UEs. For ease of discussion, the one or more processing circuits 32 are referred to hereafter as "the processing circuit 32." The processing circuit 32 comprises one or more digital processors 42, e.g., one or more microprocessors, microcontrollers, Digital Signal Processors (DSPs), Field Programmable Gate Arrays (FPGAs), Complex Programmable Logic Devices (CPLDs), Application Specific Integrated Circuits (ASICs), or any mix thereof. More generally, the processing circuit 32 may comprise fixed circuitry, or programmable circuitry that is specially configured via the execution of program instructions implementing the functionality taught herein, or may comprise some mix of fixed and programmed circuitry. The processor 42 may be multi-core having two or more processor cores utilized for enhanced performance, reduced power consumption, and more efficient simultaneous processing of multiple tasks.

The processing circuit 32 also includes a memory 44. The memory 44, in some embodiments, stores one or more computer programs 46 and, optionally, configuration data 48. The memory 44 provides non-transitory storage for the computer program 46 and it may comprise one or more types of computer-readable media, such as disk storage, solid-state memory storage, or any mix thereof. By way of non-limiting example, the memory 44 comprises any one or more of SRAM, DRAM, EEPROM, and FLASH memory, which may be in the processing circuit 32 and/or separate from the processing circuit 32.

In general, the memory 44 comprises one or more types of computer-readable storage media providing non-transitory storage of the computer program 46 and any configuration data 48 used by the network node 30. Here, "non-transitory" means permanent, semi-permanent, or at least temporarily persistent storage and encompasses both long-term storage in non-volatile memory and storage in working memory, e.g., for program execution.

In some embodiments, the processor 42 of the processing circuit 32 may execute a computer program 46 stored in the memory 44 that configures the processor 42 to obtain an LBT-related parameter, LBT-related condition, or LBT-related constraint for radio measurements and use the obtained LBT-related parameter, LBT-related condition, or LBT-related constraint to perform at least one of: controlling a wireless device measurement time; configuring at least one counter or a timer associated with the measurement; controlling a wireless device measurement configuration; and adapting at least one transmission configuration parameter for transmitting signals to be used by the wireless device for the measurement. This functionality may be performed by measurement control circuitry 40 in processing circuit 32.

The term LBT used herein may correspond to any type of CSMA procedure or clear channel assessment mechanism that is performed by the node on a carrier before deciding to transmit signals on that carrier. The term "LBT parameter" used herein may refer, for example, to any of:
- the number of configured discovery signal occasions that are not available during a certain time (e.g., Tdetect_intra_FS3) for cell detection at the UE due to the absence of the necessary radio signals, where the certain time depends on the LBT parameter;
- the number of configured discovery signal occasions that are not available during a certain time (e.g., Tmeasure_intra_FS3_CRS) for the measurements at the UE due to the absence of the necessary radio signals, where the certain time depends on the LBT parameter;
- the number of configured discovery signal occasions that are not available during a certain time (e.g., Tmeasure_intra_FS3_CSI-RS) for the measurements at the UE due to the absence of the necessary radio signals, where the certain time depends on the LBT parameter;
- the number of expected or configured signal occasions that do not contain (e.g., due to LBT failure at the transmitting node) at least one radio signal which is necessary for the measurement;
- the number of LBT failures of the node transmitting the signals used for the measurement;
- the number of LBT failures, as determined by the UE, of the node transmitting the signals used for the measurement;
- the duration length of the channel holding by the transmitting node, as a result of LBT, which makes it possible to transmit the signals used for the measurement;
- LBT frequency or LBT probability (how often the transmitter attempts to access the channel);
- LBT success or LBT failure probability;
- LBT success rate or LBT failure rate.

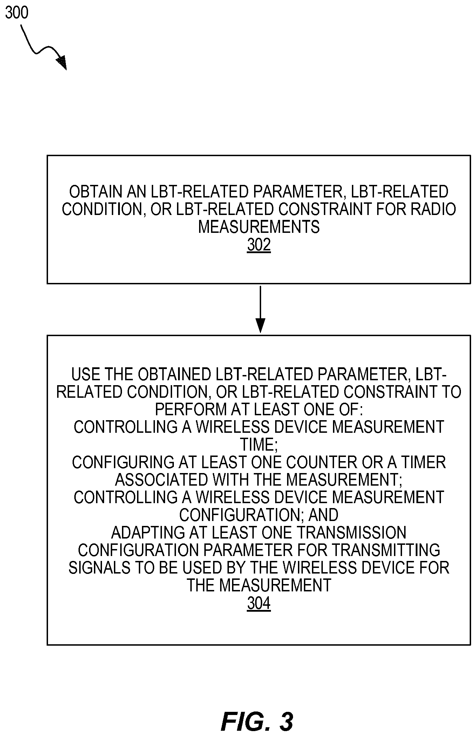

The processing circuit 32 of the network node 30 is configured to perform a method for controlling a wireless device performing radio measurements in a wireless system where one or more nodes apply LTB operations when transmitting on at least one carrier, such as method 300 of Figure 3. The method 300 includes obtaining an LBT-related parameter, LBT-related condition, or LBT-related constraint for radio measurements (302) and using the obtained LBT-related parameter, LBT-related condition, or LBT-related constraint to perform (304) at least one of: controlling a wireless device measurement time; configuring at least one counter or a timer associated with the measurement; controlling a wireless device measurement configuration; and adapting at least one transmission configuration parameter for transmitting signals to be used by the wireless device for the measurement. The measurement time may be a maximum measurement time.

In some cases, the obtaining includes one or more of: an applicable condition or constraint on an LBT-related parameter for radio measurements; an applicable limited set of values for an LBT-related parameter for radio measurements; an applicable limited range of values for an LBT-related parameter for radio measurements; an applicable condition or constraint for a measurement time value, wherein the measurement time value depends on an LBT-related parameter; and an applicable limited range of measurement time values, wherein the measurement time values depend on an LBT-related parameter.

In other cases, the obtaining includes obtaining a constraint or condition on an LBT-related parameter. The LBT-related parameter comprises any of:
- a number of configured discovery signal occasions that are not available during a certain time for cell detection at wireless device due to the absence of the necessary radio signals;
- a number of configured discovery signal occasions that are not available during a certain time for the measurements at the wireless device due to the absence of necessary radio signals;
- a number of configured discovery signal occasions that are not available during a certain time for the measurements at the wireless device due to the absence of necessary radio signals;
- a number of expected or configured signal occasions that do not contain at least one radio signal that is necessary for the measurement;
- a number of LBT failures of the node transmitting the signals used for the measurement; and
- a number of LBT failures, as determined by the wireless device, of the node transmitting the signals used for the measurement.

The obtaining may also include obtaining an LBT-related parameter, where the LBT-related parameter comprises one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate.

The obtaining of method 300 may also be based on one or more of: a number of samples without LBT; a wireless device speed; a radio condition or characteristic; a measurement bandwidth; a wireless device activity state; a periodicity or duration of activity/inactivity periods; a measurement gap configuration; a measurement cycle configuration for the wireless device; an achievable measurement performance or target measurement performance of the measurement; a number of inter-frequency carriers used by the wireless device in parallel to the measurement; and the wireless device's capability to perform measurements on one or more non-serving carrier frequencies without gaps.

In another example, a method in a network node for controlling the wireless device (e.g., UE) measurement period associated with an LBT parameter includes two steps. In Step 1, the method includes obtaining at least one of: an applicable condition or constraint on the LBT parameter; an applicable limited set of values for the LBT parameter; an applicable limited range of values for the LBT parameter; an applicable condition or constraint for the measurement time values where the measurement time depends on the LBT parameter; and an applicable limited range of the measurement time values where the measurement time depends on the LBT parameter. The obtaining may be for one or more UEs.

In Step 2, the method includes using the result of the obtaining step for at least one of: controlling the UE measurement time, based on the result of the obtaining step; configuring at least one counter or a timer associated with the measurement; controlling the UE measurement configuration; and adapting at least one transmission configuration parameter for transmitting signals to be used for the measurement.

The controlling may include sending the result of the obtaining step to the UE. The configuring may include configuring a counter or a timer related to the waiting time in the network node for receiving the UE measurement. The controlling of the UE measurement configuration may also include one or more of:
- adaptively to the result of the obtaining step, configuring the measurement bandwidth;
- adaptively to the result of the obtaining step, configuring the measurement periodicity;
- adaptively to the result of the obtaining step, configuring the total measurement period;
- adaptively to the result of the obtaining step, configuring the number of measurement samples or sampling rate; and
- adaptively to the result of the obtaining step, configuring UE measurement gaps.

Adapting transmission configuration parameters for transmitting signals to be used for the measurement may include:
- adapting transmission periodicity of the signal;
- adapting transmission bandwidth of the signal;
- adapting the number of transmitted samples of the signal;
- adapting the transmit signal duration;
- adapting antenna configuration (beam configuration); and/or
- adapting the frequency of LBT and/or the resulting channel holding time.
For example, to enable more measurement samples for one channel access, the channel holding time may be increased. To enable more samples during a certain time or to increase the probability of accessing the channel, the frequency of LBT attempts may be increased.

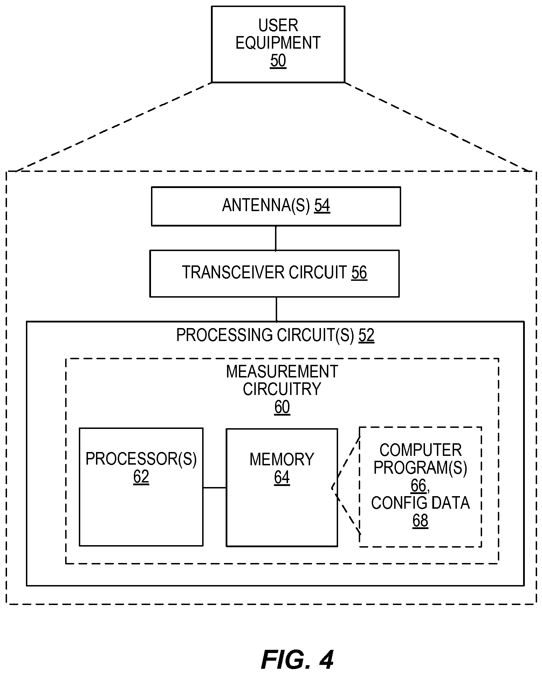

Figure 4 illustrates a diagram of a complementary wireless device, such as a user equipment 50, according to some embodiments. To ease explanation, the user equipment 50 may also be considered to represent any wireless device that may utilize CA or LAA in a network. The UE may be a radio communication device, target device (device targeted for communication), device to device (D2D) UE, machine type UE or UE capable of machine to machine communication (M2M), a sensor equipped with UE, iPAD, Tablet, mobile terminals, smart phone, laptop embedded equipped (LEE), laptop mounted equipment (LME), USB dongles, Customer Premises Equipment (CPE) etc.

The user equipment 50 communicates with a radio node or base station, such as network access node 30, via antennas 54 and a transceiver circuit 56. The transceiver circuit 56 may include transmitter circuits, receiver circuits, and associated control circuits that are collectively configured to transmit and receive signals according to a radio access technology, for the purposes of providing cellular communication services. According to various embodiments, cellular communication services may be operated according to any one or more of the 3GPP cellular standards, GSM, GPRS, WCDMA, HSDPA, LTE and LTE-Advanced.

The user equipment 50 also includes one or more processing circuits 52 that are operatively associated with the radio transceiver circuit 56. The processing circuit 52 comprises one or more digital processing circuits, e.g., one or more microprocessors, microcontrollers, DSPs, FPGAs, CPLDs, ASICs, or any mix thereof. More generally, the processing circuit 52 may comprise fixed circuitry, or programmable circuitry that is specially adapted via the execution of program instructions implementing the functionality taught herein, or may comprise some mix of fixed and programmed circuitry. The processing circuit 52 may be multi-core.

The processing circuit 52 also includes a memory 64. The memory 64, in some embodiments, stores one or more computer programs 66 and, optionally, configuration data 68. The memory 64 provides non-transitory storage for the computer program 66 and it may comprise one or more types of computer-readable media, such as disk storage, solid-state memory storage, or any mix thereof. By way of non-limiting example, the memory 64 comprises any one or more of SRAM, DRAM, EEPROM, and FLASH memory, which may be in the processing circuit 52 and/or separate from processing circuit 52. In general, the memory 64 comprises one or more types of computer-readable storage media providing non-transitory storage of the computer program 66 and any configuration data 68 used by the user equipment 50.

In some embodiments, the processor 62 of the processing circuit 52 may execute a computer program 66 stored in the memory 64 that configures the processor 62 to perform a method for performing radio measurements in a wireless system where one or more nodes apply LTB operations when transmitting on at least one carrier. Specifically, the processing circuit 32 is configured to obtain an LBT-related parameter, LBT-related condition, or LBT-related constraint for radio measurements and determine a measurement time, based on the obtained LBT-related parameter, LBT-related condition, or LBT-related constraint for radio measurements. The processing circuit 52 is also configured to perform a radio measurement within the determined measurement time, to obtain a measurement result and report the measurement result to another node, log the measurement result and/or use the measurement result for one or more operational tasks in the UE 50. This functionality and other described functions may be performed by measurement circuitry 60 in processing circuit 52.

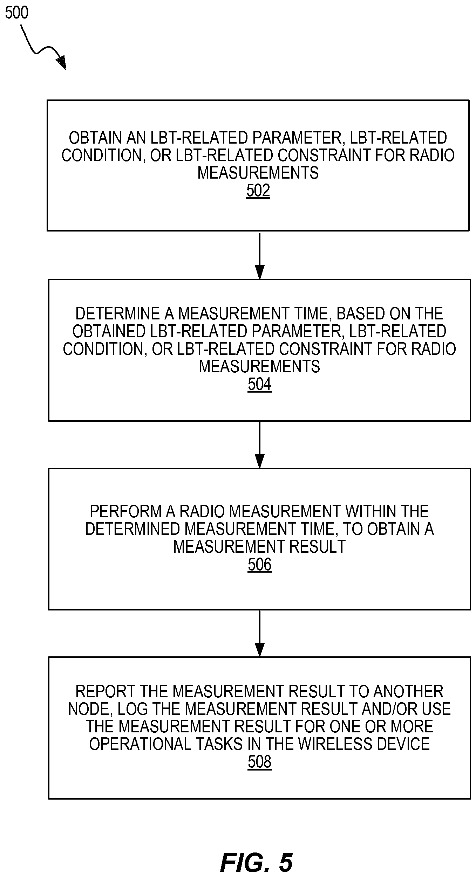

According to some embodiments, the processing circuit 52 of the user equipment 50 is configured to perform a method 500 for performing radio measurements in a wireless system where one or more nodes apply LTB operations when transmitting on at least one carrier. The method 500, shown in Fig. 5, includes obtaining an LBT-related parameter, LBT-related condition, or LBT-related constraint for radio measurements (block 502) and determining a measurement time, based on the obtained LBT-related parameter, LBT-related condition, or LBT-related constraint for radio measurements (block 504). The method 500 also includes performing a radio measurement within the determined measurement time, to obtain a measurement result (block 506) and reporting the measurement result to another node, logging the measurement result and/or using the measurement result for one or more operational tasks in the wireless device (block 508). The measurement time may be a maximum measurement time.

The obtaining of method 500 may include obtaining one or more of: an applicable condition or constraint on an LBT-related parameter for radio measurements; an applicable limited set of values for an LBT-related parameter for radio measurements; an applicable limited range of values for an LBT-related parameter for radio measurements; an applicable condition or constraint for a measurement time value, wherein the measurement time value depends on an LBT-related parameter; and an applicable limited range of measurement time values, wherein the measurement time values depend on an LBT-related parameter.

In some embodiments, the obtaining includes obtaining a constraint or condition on an LBT-related parameter, and wherein the LBT-related parameter comprises any of:
- a number of configured discovery signal occasions that are not available during a certain time for cell detection at wireless device due to the absence of the necessary radio signals;
- a number of configured discovery signal occasions that are not available during a certain time for the measurements at the wireless device due to the absence of necessary radio signals;
- a number of configured discovery signal occasions that are not available during a certain time for the measurements at the wireless device due to the absence of necessary radio signals;
- a number of expected or configured signal occasions that do not contain at least one radio signal that is necessary for the measurement;
- a number of LBT failures of the node transmitting the signals used for the measurement; and
- a number of LBT failures, as determined by the wireless device, of the node transmitting the signals used for the measurement.

In other embodiments, the obtaining includes obtaining an LBT-related parameter that may be one of: a duration length of the channel-holding by the transmitting node, as a result of LBT, which makes it possible to transmit the signals used for the measurement; an LBT frequency or LBT probability; an LBT success or LBT failure probability; and an LBT success rate or LBT failure rate.

The obtaining of method 500 may also be based on one or more of:
- a number of samples without LBT;
- a wireless device speed;
- a radio condition or characteristic;
- a measurement bandwidth;
- a wireless device activity state;
- a periodicity or duration of activity/inactivity periods;
- a measurement gap configuration;
- a measurement cycle configuration for the wireless device;
- an achievable measurement performance or target measurement performance of the measurement;
- a number of inter-frequency carriers used by the wireless device in parallel to the measurement; and
- the wireless device's capability to perform measurements on one or more non-serving carrier frequencies without gaps.

In another example of a method at a wireless device (e.g., UE), a method for performing a radio measurement based on an LBT parameter may include a few steps. Step 1 includes obtaining at least one of: an applicable condition or constraint on the LBT parameter; an applicable limited set of values for the LBT parameter; an applicable limited range of values for the LBT parameter; an applicable condition or constraint for the measurement time values where the measurement time depends on the LBT parameter; and an applicable limited range of the measurement time values where the measurement time depends on the LBT parameter. Step 2 includes determining the measurement time, based on the result of the obtaining step. Step 3 includes performing the measurement within the determined measurement time. Step 4 includes reporting the measurement to another node, logging the measurement, and/or using the measurement for one or more UE operational tasks.

Note that the steps are described for a UE performing a measurement on radio signal(s) transmitted by another node (e.g., eNodeB) that may perform LBT. However, the same steps may be applicable in general to any first radio node (e.g., UE or a radio network node) performing a measurement on radio signal(s) transmitted by a second radio node (e.g., another UE or another radio network node) that may perform LBT.

As for Step 1, examples of a condition or constraint on the LBT parameter may include that an LBT parameter is below a first threshold and/or above a second threshold. Some examples of a limited set of values for an LBT parameter include sets of some positive or non-negative integers. For instance: 0, 1, 2, 3; 1, ..., maxLBTparameter; 0, ..., maxLBTparameter; minLBTparameter, ..., maxLBTparameter. Some examples of a limited range of values for LBT parameter include: [0,3]; [1,maxLBTparameter]; [0,maxLBTparameter], and [minLBTparameter,maxLBTparameter]. Some examples of a condition or constraint for the measurement time may be T<=Tmax or Tmin<=T<=Tmax. Some examples of a limited range of the measurement time include: [0,Tmax], [0,Tmax), [Tmin, Tmax].

If LBT is performed in both uplink and downlink on the carrier(s) used for the measurement, then some of the following may apply. In one example, the values of the uplink LBT parameter and the downlink LBT parameter may be the same. In another example, the values of the uplink LBT parameter and the DL LBT parameter may be different. In an example, the values of the uplink LBT parameter and the DL LBT parameter may be determined independently, i.e., can be the same or different. In yet another example, the values of the uplink LBT parameter (H1) and the downlink LBT (H2) parameter are related by a relation. For example, H1=f1(H2) or H2=f2(H1), where f denotes a function.

The obtaining may further include one or more of:
- using a pre-defined value, value set, or value range of the LBT parameter and/or measurement time;
- receiving from another node (e.g., from a network node);
- determining based on a pre-defined rule;
- determining based on a pre-defined function;
- autonomously determined by the UE e.g. based on one or more criteria; and
- using one or more pre-defined second parameters or parameters received from another node (e.g., from a network node) for determining the applicable value, set, or range of the LBT parameter (first parameter) and/or measurement time.
Some examples of the second parameter include: maximum value of the LBT parameter, minimum value of the LBT parameter, maximum measurement time, minimum measurement time, LBT probability, etc.

In some cases, the obtaining step may further be based on other conditions or characteristics. For instance, the obtaining may be based on the number of samples without LBT. In an example, if the measurement time function is (k+L) ^{∗} T_DMTC_periodicity (e.g., k=1 for good channel condition and/or larger measurement bandwidth, and k=4 for worse channel condition and/or smaller measurement bandwidth), where L is the "LBT parameter" and is the number of DRS signal occasions with no signals available for the measurement, then the maximum applicable value for L may be a function of k, e.g., L=m^{∗}k.

The obtaining may also be based on a UE speed. For example, maxLBTparameter1 > maxLBTparameter2 and the speed1 < speed2, where maxLBTparameter1 is for speed1 and maxLBTparameter2 is for speed2.

The obtaining maybe based on radio condition or characteristics: Signal quality (e.g., Es/Iot, SNR, SINR), signal strength (e.g., RSRP), interference level (e.g., RSSI, Io, Noc), load, and transmit power. For example, the maximum LBT parameter is smaller for a worse signal quality (e.g., when SINR is below a threshold) and is larger for a better signal quality (e.g., when SINR is equal to or larger than a threshold).

The obtaining may be based on a measurement bandwidth of the measurement. For example, the maximum LBT parameter (P) is smaller for a larger measurement bandwidth and larger for a smaller measurement bandwidth. For instance, P= 4 and P=2 for measurement BW of 6 RBs and measurement BW of 25 RBs or greater respectively.

The obtaining may be based on a UE activity state. For example, the maximum LBT parameter may be larger for UE in non-DRX state and smaller for UE in DRX cycle.

The obtaining may be based on a periodicity or duration of the activity/inactivity periods. For example, this may be a UE DRX cycle length (e.g., the maximum LBT parameter may be larger for UE in shorter DRX cycle and smaller for longer DRX cycle). Examples of shorter and longer DRX cycles are 40 ms and 640 ms respectively and the corresponding max LBT parameter (P) value are 4 and 2 respectively.

The obtaining may be based on a measurement gap configuration for UE using measurement gaps. For example, the maximum LBT parameter may be larger for no gaps or for shorter gaps and the maximum LBT parameter may be smaller for longer gaps. On the other hand, the maximum LBT parameter may be larger for a shorter measurement gap period and smaller for a longer measurement gap period. Examples of shorter and longer measurement gaps are 2 ms and 6 ms respectively. Examples of max LBT parameter (P) value are 8 and 4 for shorter and longer gaps respectively.

The obtaining may be based on a measurement cycle configuration for UE using measurement cycle for doing measurements on cells of SCC with deactivated SCell. For example, the maximum LBT parameter may be larger for shorter measurement cycle and the maximum LBT parameter may be smaller for longer measurement cycle. Examples of shorter and longer measurement cycles are 160 ms and 640 ms respectively. Examples of max LBT parameter (P) value are 6 and 3 for shorter and longer measurement cycles respectively.

The obtaining may be based on an achievable measurement performance or target measurement performance of the measurement. For example, the UE may select the value of the parameter or limit the maximum value of the LBT parameter (P) based on the outcome of the measurement results. For instance, the UE may autonomously select P = 4 if the UE, while performing the measurement (e.g. RSRP), meets the pre-defined measurement accuracy of that measurement with P=4. Otherwise, the UE continues performing that measurement until the time that the pre-defined measurement accuracy has been met.

The obtaining may also be based on a number of inter-frequency carriers used by the UE in parallel to the measurement. For example, a larger LBT parameter is used when the number of inter-frequencies is below a threshold and smaller otherwise. The obtaining may also be based on a UE's capability to perform measurements on one or more non-serving carrier frequencies without gaps.

As for Step 2, the UE is determining the measurement time, based on the result of the obtaining step. The determined measurement time may be the maximum measurement time for this measurement and it may be a requirement on the UE implementation for this type of measurement. The determined measurement time may further be associated with one or more of the following example conditions: signal quality conditions, interference conditions, signal strength conditions, Es/Iot conditions, environmental conditions (e.g., normal or extreme), etc.

In some embodiments, the determining may include one or more of:
- calculating the measurement time based on at least one of the applicable LBT parameter value(s);
- constraining the applicability of the determined measurement time, where the constraint(s) are based on the at least one of the applicable LBT parameter value(s);
- determining based on a pre-defined rule or a function (e.g. the maximum measurement time is (k+L) ^{∗} T_DMTC_periodicity where L=maxLBTparameter or L does not exceeds maxLBTparameter);
- determining based on the measurement bandwidth (e.g., smaller bandwidth gives a shorter maximum measurement period);
- determining based on one or more conditions (signal quality, signal strength, interference condition, environmental condition, etc. - e.g. better conditions give a shorter measurement period);
- determining depending on the UE activity state (e.g., DRX or non-DRX) or periodicity and/or duration of the activity/inactivity states;
- determining as a function of at least measurement gap configuration and/or measurement cycle configuration;
- determining depending on the number of configured inter-frequency carriers, e.g., scaling with the number of inter-frequency carriers.

In Step 3, the UE is performing the measurement within the determined measurement time. The UE may be even required to perform the measurement within the determined measurement time. For example, a standard-compliant UE shall not perform the measurement over a time longer than the determined measurement time. The requirement may apply under one or more certain conditions. These may include signal quality conditions, interference conditions, signal strength conditions, Es/Iot conditions, environmental conditions (e.g., normal or extreme), etc.

The UE may also be tested, using testing equipment, whether the UE is able to perform (and maybe also report) the measurement during the determined measurement time. The testing may also be performed under one or more certain conditions, such as signal quality conditions, interference conditions, signal strength conditions, Es/Iot conditions, environmental conditions (e.g., normal or extreme), etc.

Performing the measurement may further comprise one or more of:
- performing one or more samples or "measurement shots" (e.g., k=1 in (k+L) ^{∗} T_DMTC_periodicity);
- combining measurement samples;
- physical layer filtering;
- higher-layer filtering;
- detecting the presence of the signals to be measured;
- detecting whether the LBT of the transmitting node (e.g., eNodeB) is failed (the necessary signal is missing due to LBT);
- deciding to not perform the next detection of the measured signals when the number of already detected LBT failures is at the maximum level of the LBT parameter;
- stopping the measurement sampling when the maximum number of LBT failures has been reached;
- adapting the (e.g., network configured or autonomous) measurement gap or measurement cycle configuration;
- adapting the UE activity configuration (e.g., DRX, non-DRX, DRX cycle, activity/inactivity duration);
- adapting the measurement configuration (e.g., bandwidth, periodicity, sampling rate, etc.);
- adapting the receiver configuration.

In Step 4, the UE may do one or more of: reporting the measurement to another node (e.g., another UE or a network node), logging the measurement (e.g., for MDT, positioning, or another purpose), and using the measurement for one or more UE operational tasks.

Some examples of the UE operational tasks are: RRM, power saving, cell change or handover, cell selection, positioning, autonomous adjustment of UE measurement parameters, receiver parameters, or transmitter parameters, etc.

Further examples of radio measurements include: DRS or discovery signal measurement, RSSI measurement, channel occupancy measurement, Wi-Fi RSSI measurement, signal strength or signal power measurements (e.g., RSRP or CSI-RSRP), signal quality measurements (e.g., RSRQ, SINR), timing measurements (e.g., Rx-Tx, RSTD, RTT, TOA), radio link monitoring measurements (RLM), CSI, PMI, cell detection, cell identification, number of successful reports, number of ACKs/NACKs, failure rate, error rate, correct system information reading, etc. The measurements may be absolute or relative (e.g., absolute RSRP and relative RSRP). The measurements may be performed for one or more different purpose, e.g., RRM, SON, positioning, MDT, etc. The measurements may be, e.g., intra-frequency measurements, inter-frequency measurements, or CA measurements. The measurements may be performed in the licensed and/or unlicensed spectrum. The measurements or measurement reporting may be single measurements, periodic or aperiodic, event-triggered, logged measurements, etc. The measurements may be unidirectional, e.g., DL measurement or UL measurements, or bidirectional, e.g., Rx-Tx or RTT.

Reporting to another node or logging may further comprise an indication of the LBT parameter value used to determine the measurement time or the number of detected LBT failures. Reporting to another node or logging may further comprise an indication of whether the maximum of the LBT parameter was reached.

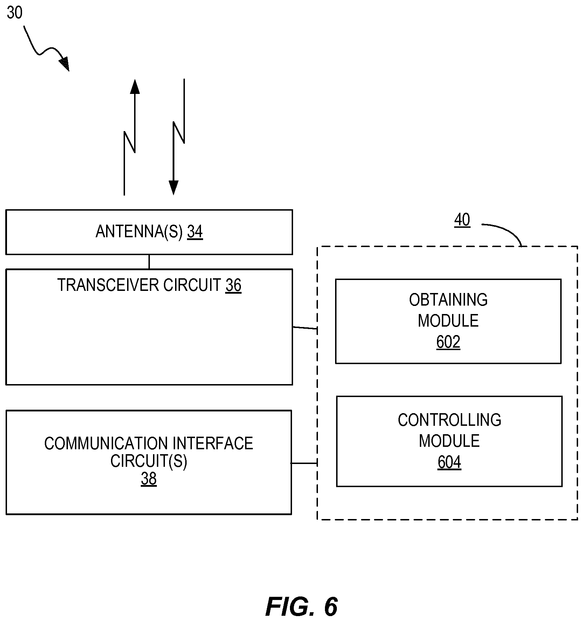

Figure 6 illustrates an example functional module or circuit architecture as may be implemented in the network node 30, e.g., based on the measurement control circuitry 40. The illustrated embodiment at least functionally includes an obtaining module 602 for obtaining an LTB-related parameter, LBT-related condition, or LBT-related constraint for radio measurements and a controlling module 604 for using the obtained LBT-related parameter, LBT-related condition, or LBT-related constraint to perform at least one of: controlling a wireless device measurement time; configuring at least one counter or a timer associated with the measurement; controlling a wireless device measurement configuration; and adapting at least one transmission configuration parameter for transmitting signals to be used by the wireless device for the measurement.

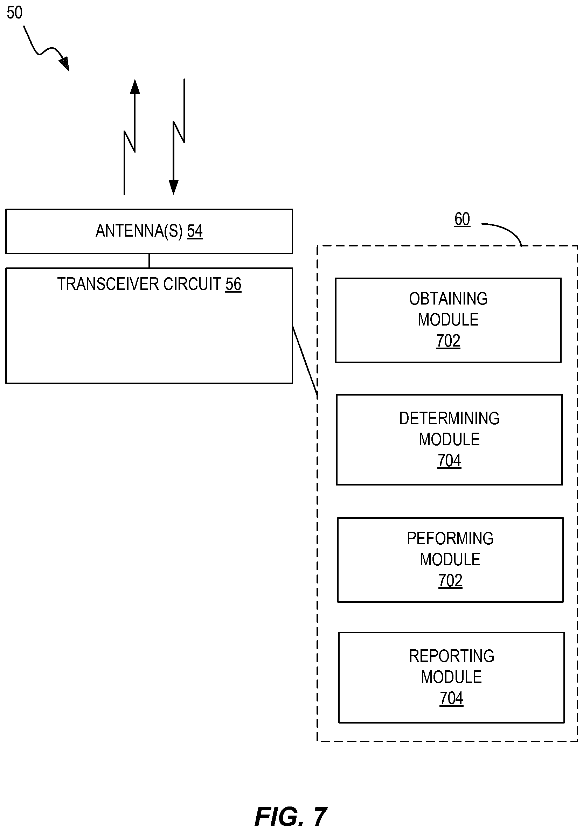

Figure 7 illustrates an example functional module or circuit architecture as may be implemented in the user equipment 50, e.g., based on the measurement circuitry 60. The illustrated embodiment at least functionally includes an obtaining module 702 for obtaining an LTB-related parameter, LBT-related condition, or LBT-related constraint for radio measurements and a determining module 704 for determining a measurement time, based on the obtained LBT-related parameter, LBT-related condition, or LBT-related constraint for radio measurements. The implementation also includes a performing module 706 for performing a radio measurement within the determined measurement time, to obtain a measurement result, and a reporting module 708 for reporting the measurement result to another node, logging the measurement result and/or using the measurement result for one or more operational tasks in the wireless device.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method, in a wireless device (50), of performing radio measurements in a wireless system where one or more nodes apply listen-before-talk (LTB) operations when transmitting on at least one carrier, the method comprising:
obtaining (502) an LBT-related parameter for radio measurements, wherein the LBT-related parameter comprises one of:
a duration length of the channel-holding by the transmitting node, as a result of LBT, which makes it possible to transmit the signals used for the measurement;
an LBT frequency or LBT probability;
an LBT success or LBT failure probability; and
an LBT success rate or LBT failure rate;
determining (504) a measurement time, based on the obtained LBT-related parameter for radio measurements,
wherein the measurement time is determined by calculating the measurement time based on at least one of an applicable LBT parameter value(s);
performing (506) a radio measurement within the determined measurement time, to obtain a measurement result; and
reporting (508) the measurement result to another node, logging the measurement result and/or using the measurement result for one or more operational tasks in the wireless device.

2. The method of claim 1, wherein the measurement time is a maximum measurement time.

3. The method of any of claims 1-2, wherein obtaining an LBT-related parameter for radio measurements comprises obtaining an LBT-related parameter based on one or more of:
a number of samples without LBT;
a wireless device speed;
a radio condition or characteristic;
a measurement bandwidth;
a wireless device activity state;
a periodicity or duration of activity/inactivity periods;
a measurement gap configuration;
a measurement cycle configuration for the wireless device;
an achievable measurement performance or target measurement performance of the measurement;
a number of inter-frequency carriers used by the wireless device in parallel to the measurement; and
the wireless device's capability to perform measurements on one or more non-serving carrier frequencies without gaps.

4. A method, in a network node (30), for controlling a wireless device performing radio measurements in a wireless system where one or more nodes apply listen-before-talk (LTB) operations when transmitting on at least one carrier, the method comprising:
obtaining (302) an LBT-related parameter for radio measurements, wherein the LBT-related parameter comprises one of:
a duration length of the channel-holding by the transmitting node, as a result of LBT, which makes it possible to transmit the signals used for the measurement;
an LBT frequency or LBT probability;
an LBT success or LBT failure probability; and
an LBT success rate or LBT failure rate; and
using (304) the obtained LBT-related parameter to perform at least one of:
controlling a wireless device measurement time;
configuring at least one counter or a timer associated with the measurement;
controlling a wireless device measurement configuration; and
adapting at least one transmission configuration parameter for transmitting signals to be used by the wireless device for the measurement.

5. The method of claim 4, wherein the measurement time is a maximum measurement time.

6. The method of any of claims 4-5, wherein the obtaining step may further be based on one or more of:
a number of samples without LBT;
a wireless device speed;
a radio condition or characteristic;
a measurement bandwidth;
a wireless device activity state;
a periodicity or duration of activity/inactivity periods;
a measurement gap configuration;
a measurement cycle configuration for the wireless device;
an achievable measurement performance or target measurement performance of the measurement;
a number of inter-frequency carriers used by the wireless device in parallel to the measurement; and
the wireless device's capability to perform measurements on one or more non-serving carrier frequencies without gaps.

7. The method of any of claims 4-6, wherein the method comprises using the obtained LBT-related parameter to control a measurement configuration of the wireless device, wherein controlling the measurement configuration of the wireless device comprises one or more of:
adaptively to the result of the obtaining step, configuring the measurement bandwidth;
adaptively to the result of the obtaining step, configuring the measurement periodicity;
adaptively to the result of the obtaining step, configuring the total measurement period;
adaptively to the result of the obtaining step, configuring the number of measurement samples or sampling rate; and
adaptively to the result of the obtaining step, configuring wireless device measurement gaps.

8. The method of any of claims 4-7, wherein the method comprises using the obtained LBT-related parameter to adapt at least one transmission configuration parameter for transmitting signals to be used by the wireless device for the measurement, wherein adapting the at least one transmission configuration comprises one or more of:
adapting a transmission periodicity of the signal;
adapting transmission bandwidth of the signal;
adapting the number of transmitted samples of the signal;
adapting the transmit signal duration;
adapting an antenna configuration for transmitting the signal; and
adapting the frequency of LBT operations and/or the resulting channel holding time.

9. A wireless device (50) configured to perform radio measurements in a wireless system where one or more nodes apply listen-before-talk (LTB) operations when transmitting on at least one carrier, the wireless device (50) comprising a processing circuit (52) configured to: obtain an LBT-related parameter for radio measurements, wherein the LBT-related parameter comprises one of:
a duration length of the channel-holding by the transmitting node, as a result of LBT, which makes it possible to transmit the signals used for the measurement;
an LBT frequency or LBT probability;
an LBT success or LBT failure probability; and
an LBT success rate or LBT failure rate;
determine a measurement time, based on the obtained LBT-related parameter for radio measurements; wherein the measurement time is determined by calculating the measurement time based on at least one of an applicable LBT parameter value(s);
perform a radio measurement within the determined measurement time, to obtain a measurement result; and
report the measurement result to another node, logging the measurement result and/or using the measurement result for one or more operational tasks in the wireless device (50).

10. The wireless device (50) of claim 9, wherein the measurement time is a maximum measurement time.

11. The wireless device (50) of any of claim 9-10, wherein the processing circuit (52) is configured to obtain an LBT-related parameter, for radio measurements based on one or more of:
a number of samples without LBT;
a wireless device speed;
a radio condition or characteristic;
a measurement bandwidth;
a wireless device activity state;
a periodicity or duration of activity/inactivity periods;
a measurement gap configuration;
a measurement cycle configuration for the wireless device (50);
an achievable measurement performance or target measurement performance of the measurement;
a number of inter-frequency carriers used by the wireless device (50) in parallel to the measurement; and
the wireless device's capability to perform measurements on one or more non-serving carrier frequencies without gaps.

12. A network node (30) configured to control a wireless device (50) performing radio measurements in a wireless system where one or more nodes apply listen-before-talk (LTB) operations when transmitting on at least one carrier, the network node (30) comprising a processing circuit (32) configured to:
obtain an LBT-related parameter for radio measurements, wherein the LBT-related parameter comprises one of:
a duration length of the channel-holding by the transmitting node, as a result of LBT, which makes it possible to transmit the signals used for the measurement;
an LBT frequency or LBT probability;
an LBT success or LBT failure probability; and
an LBT success rate or LBT failure rate; and
use the obtained LBT-related parameter to perform at least one of:
control a wireless device measurement time;
configure at least one counter or a timer associated with the measurement;
control a wireless device measurement configuration; and
adapt at least one transmission configuration parameter for transmitting signals to be used by the wireless device (50) for the measurement.

13. The network node (30) of claim 12, wherein the measurement time is a maximum measurement time.

14. The network node (30) of any of claim 12-13, wherein the processing circuit (52) is configured to obtain an LBT-related parameter for radio measurements based on one or more of:
a number of samples without LBT;
a wireless device speed;
a radio condition or characteristic;
a measurement bandwidth;
a wireless device activity state;
a periodicity or duration of activity/inactivity periods;
a measurement gap configuration;
a measurement cycle configuration for the wireless device (50);
an achievable measurement performance or target measurement performance of the measurement;
a number of inter-frequency carriers used by the wireless device (50) in parallel to the measurement; and
the wireless device's capability to perform measurements on one or more non-serving carrier frequencies without gaps.

15. The network node (30) of any of claims 12-14, wherein the processing circuit (52) is configured to use the obtained LBT-related parameter to control a measurement configuration of the wireless device by one or more of:
adaptively to the result of the obtaining step, configuring the measurement bandwidth;
adaptively to the result of the obtaining step, configuring the measurement periodicity;
adaptively to the result of the obtaining step, configuring the total measurement period;
adaptively to the result of the obtaining step, configuring the number of measurement samples or sampling rate; and
adaptively to the result of the obtaining step, configuring wireless device measurement gaps.

## Patentansprüche

1. Verfahren, in einer drahtlosen Vorrichtung (50), zum Durchführen von Funkmessungen in einem drahtlosen System, wobei ein oder mehrere Knoten beim Übertragen auf mindestens einem Träger Listen-Before-Talk-Operationen (LTB-Operationen) anwenden, das Verfahren umfassend:
Erhalten (502) eines LBT-bezogenen Parameters für Funkmessungen, wobei der LBT-bezogene Parameter eines umfasst von:
einer Länge der Dauer des Kanalhaltens durch den übertragenden Knoten, als ein Ergebnis von LBT, was es ermöglicht, die zur Messung verwendeten Signale zu übertragen;
einer LBT-Frequenz oder LBT-Wahrscheinlichkeit;
einer LBT-Erfolgs- oder LBT-Fehlerwahrscheinlichkeit; und einer LBT-Erfolgsrate oder LBT-Fehlerrate;
Bestimmen (504) einer Messzeit basierend auf dem erhaltenen LBT-bezogenen Parameter für Funkmessungen,
wobei die Messzeit durch Berechnen der Messzeit basierend auf mindestens einem von einem anwendbaren LBT-Parameterwert/anwendbaren LBT-Parameterwerten bestimmt wird;
Durchführen (506) einer Funkmessung innerhalb der bestimmten Messzeit, um ein Messergebnis zu erhalten; und
Berichten (508) des Messergebnisses an einen anderen Knoten, Protokollieren des Messergebnisses und/oder Verwenden des Messergebnisses für eine oder mehrere operative Aufgaben in der drahtlosen Vorrichtung.

2. Verfahren nach Anspruch 1, wobei die Messzeit eine maximale Messzeit ist.

3. Verfahren nach einem der Ansprüche 1 bis 2, wobei das Erhalten eines LBT-bezogenen Parameters für Funkmessungen ein Erhalten eines LBT-bezogenen Parameters basierend auf einem oder mehreren umfasst von:
einer Anzahl von Proben ohne LBT;
einer Geschwindigkeit einer drahtlosen Vorrichtung;
einem Funkzustand oder einer Funkeigenschaft;
einer Messbandbreite;
einem Aktivitätszustand einer drahtlosen Vorrichtung;
einer Periodizität oder Dauer von Aktivitäts-/Inaktivitätsperioden;
einer Messlückenkonfiguration;
einer Messzykluskonfiguration für die drahtlose Vorrichtung;
einer erzielbaren Messleistung oder Zielmessleistung der Messung;
einer Anzahl von Zwischenfrequenzträgern, die von der drahtlosen Vorrichtung parallel zu der Messung verwendet werden; und
der Fähigkeit der drahtlosen Vorrichtung, Messungen auf einer oder mehreren nicht bedienenden Trägerfrequenzen ohne Lücken durchzuführen.

4. Verfahren, in einem Netzknoten (30), zum Steuern einer drahtlosen Vorrichtung, die Funkmessungen in einem drahtlosen System durchführt, wobei ein oder mehrere Knoten beim Übertragen auf mindestens einem Träger Listen-Before-Talk-Operationen (LTB-Operationen) anwenden, das Verfahren umfassend:
Erhalten (302) eines LBT-bezogenen Parameters für Funkmessungen, wobei der LBT-bezogene Parameter eines umfasst von:
einer Länge der Dauer des Kanalhaltens durch den übertragenden Knoten, als ein Ergebnis von LBT, was es ermöglicht, die zur Messung verwendeten Signale zu übertragen;
einer LBT-Frequenz oder LBT-Wahrscheinlichkeit;
einer LBT-Erfolgs- oder LBT-Fehlerwahrscheinlichkeit; und
einer LBT-Erfolgsrate oder LBT-Fehlerrate; und
Verwenden (304) des erhaltenen LBT-bezogenen Parameters, um mindestens eines durchzuführen von:
Steuern einer Messzeit einer drahtlosen Vorrichtung;
Konfigurieren von mindestens einem Zähler oder einem Zeitgeber, der der Messung zugeordnet ist;
Steuern einer Messkonfiguration einer drahtlosen Vorrichtung; und
Anpassen von mindestens einem Übertragungskonfigurationsparameter zum Übertragen von Signalen, die von der drahtlosen Vorrichtung für die Messung verwendet werden sollen.

5. Verfahren nach Anspruch 4, wobei die Messzeit eine maximale Messzeit ist.

6. Verfahren nach einem der Ansprüche 4 bis 5, wobei der Erhalteschritt ferner auf einem oder mehreren basieren kann von:
einer Anzahl von Proben ohne LBT;
einer Geschwindigkeit einer drahtlosen Vorrichtung;
einem Funkzustand oder einer Funkeigenschaft;
einer Messbandbreite;
einem Aktivitätszustand einer drahtlosen Vorrichtung;
einer Periodizität oder Dauer von Aktivitäts-/Inaktivitätsperioden;
einer Messlückenkonfiguration;
einer Messzykluskonfiguration für die drahtlose Vorrichtung;
einer erzielbaren Messleistung oder Zielmessleistung der Messung;
einer Anzahl von Zwischenfrequenzträgern, die von der drahtlosen Vorrichtung parallel zu der Messung verwendet werden; und
der Fähigkeit der drahtlosen Vorrichtung, Messungen auf einer oder mehreren nicht bedienenden Trägerfrequenzen ohne Lücken durchzuführen.

7. Verfahren nach einem der Ansprüche 4 bis 6, wobei das Verfahren ein Verwenden des erhaltenen LBT-bezogenen Parameters umfasst, um eine Messkonfiguration der drahtlosen Vorrichtung zu steuern, wobei das Steuern der Messkonfiguration der drahtlosen Vorrichtung eines oder mehrere umfasst von:
adaptiv zu dem Ergebnis des Erhalteschritts, Konfigurieren der Messbandbreite;
adaptiv zu dem Ergebnis des Erhalteschritts, Konfigurieren der Messperiodizität;
adaptiv zu dem Ergebnis des Erhalteschritts, Konfigurieren der Gesamtmessperiode;
adaptiv zu dem Ergebnis des Erhalteschritts, Konfigurieren der Anzahl von Messabtastwerten oder der Abtastrate; und
adaptiv zu dem Ergebnis des Erhalteschritts, Konfigurieren der Messlücken der drahtlosen Vorrichtung.

8. Verfahren nach einem der Ansprüche 4 bis 7, wobei das Verfahren ein Verwenden des erhaltenen LBT-bezogenen Parameters umfasst, um mindestens einen Übertragungskonfigurationsparameter zum Übertragen von Signalen, die von der drahtlosen Vorrichtung für die Messung verwendet werden sollen, anzupassen, wobei das Anpassen der mindestens einen Übertragungskonfiguration eines oder mehrere umfasst von:
Anpassen einer Übertragungsperiodizität des Signals;
Anpassen einer Übertragungsbandbreite des Signals;
Anpassen der Anzahl von übertragenen Abtastwerten des Signals;
Anpassen der Übertragungssignaldauer;
Anpassen einer Antennenkonfiguration zum Übertragen des Signals; und
Anpassen der Frequenz von LBT-Operationen und/oder der resultierenden Kanalhaltezeit.

9. Drahtlose Vorrichtung (50), die konfiguriert ist, um Funkmessungen in einem drahtlosen System durchzuführen, wobei ein oder mehrere Knoten beim Übertragen auf mindestens einem Träger Listen-Before-Talk-Operationen (LTB-Operationen) anwenden, die drahtlose Vorrichtung (50) umfassend eine Verarbeitungsschaltung (52), die konfiguriert ist zum:
Erhalten eines LBT-bezogenen Parameters für Funkmessungen, wobei der LBT-bezogene Parameter eines umfasst von:
einer Länge der Dauer des Kanalhaltens durch den übertragenden Knoten, als ein Ergebnis von LBT, was es ermöglicht, die zur Messung verwendeten Signale zu übertragen;
einer LBT-Frequenz oder LBT-Wahrscheinlichkeit;
einer LBT-Erfolgs- oder LBT-Fehlerwahrscheinlichkeit; und
einer LBT-Erfolgsrate oder LBT-Fehlerrate;
Bestimmen einer Messzeit, basierend auf dem erhaltenen LBT-bezogenen Parameter für Funkmessungen; wobei die Messzeit durch Berechnen der Messzeit basierend auf mindestens einem von einem anwendbaren LBT-Parameterwert/anwendbaren LBT-Parameterwerten bestimmt wird;
Durchführen einer Funkmessung innerhalb der bestimmten Messzeit, um ein Messergebnis zu erhalten; und
Berichten des Messergebnisses an einen anderen Knoten, Protokollieren des Messergebnisses und/oder Verwenden des Messergebnisses für eine oder mehrere operative Aufgaben in der drahtlosen Vorrichtung (50).

10. Drahtlose Vorrichtung (50) nach Anspruch 9, wobei die Messzeit eine maximale Messzeit ist.

11. Drahtlose Vorrichtung (50) nach einem der Ansprüche 9 bis 10, wobei die Verarbeitungsschaltung (52) konfiguriert ist, um einen LBT-bezogenen Parameter für Funkmessungen basierend auf einem oder mehreren zu erhalten von:
einer Anzahl von Proben ohne LBT;
einer Geschwindigkeit einer drahtlosen Vorrichtung;
einem Funkzustand oder einer Funkeigenschaft;
einer Messbandbreite;
einem Aktivitätszustand einer drahtlosen Vorrichtung;
einer Periodizität oder Dauer von Aktivitäts-/Inaktivitätsperioden;
einer Messlückenkonfiguration;
einer Messzykluskonfiguration für die drahtlose Vorrichtung (50);
einer erzielbaren Messleistung oder Zielmessleistung der Messung;
einer Anzahl von Zwischenfrequenzträgern, die von der drahtlosen Vorrichtung (50) parallel zu der Messung verwendet werden; und
der Fähigkeit der drahtlosen Vorrichtung, Messungen auf einer oder mehreren nicht bedienenden Trägerfrequenzen ohne Lücken durchzuführen.

12. Netzknoten (30), der konfiguriert ist, um eine drahtlose Vorrichtung (50) zu steuern, die Funkmessungen in einem drahtlosen System durchführt, wobei ein oder mehrere Knoten beim Übertragen auf mindestens einem Träger Listen-Before-Talk-Operationen (LTB-Operationen) anwenden, der Netzknoten (30) umfassend eine Verarbeitungsschaltung (32), die konfiguriert ist zum:
Erhalten eines LBT-bezogenen Parameters für Funkmessungen, wobei der LBT-bezogene Parameter eines umfasst von:
einer Länge der Dauer des Kanalhaltens durch den übertragenden Knoten, als ein Ergebnis von LBT, was es ermöglicht, die zur Messung verwendeten Signale zu übertragen;
einer LBT-Frequenz oder LBT-Wahrscheinlichkeit;
einer LBT-Erfolgs- oder LBT-Fehlerwahrscheinlichkeit; und
einer LBT-Erfolgsrate oder LBT-Fehlerrate; und
Verwenden des erhaltenen LBT-bezogenen Parameters, um mindestens eines durchzuführen von:
Steuern einer Messzeit einer drahtlosen Vorrichtung;
Konfigurieren von mindestens einem Zähler oder einem Zeitgeber, der der Messung zugeordnet ist;
Steuern einer Messkonfiguration einer drahtlosen Vorrichtung und
Anpassen von mindestens einem Übertragungskonfigurationsparameter zum Übertragen von Signalen, die von der drahtlosen Vorrichtung (50) für die Messung verwendet werden sollen.

13. Netzknoten (30) nach Anspruch 12, wobei die Messzeit eine maximale Messzeit ist.

14. Netzknoten (30) nach einem der Ansprüche 12 bis 13, wobei die Verarbeitungsschaltung (52) konfiguriert ist, um einen LBT-bezogenen Parameter für Funkmessungen basierend auf einem oder mehreren zu erhalten von:
einer Anzahl von Proben ohne LBT;
einer Geschwindigkeit einer drahtlosen Vorrichtung;
einem Funkzustand oder einer Funkeigenschaft;
einer Messbandbreite;
einem Aktivitätszustand einer drahtlosen Vorrichtung;
einer Periodizität oder Dauer von Aktivitäts-/Inaktivitätsperioden;
einer Messlückenkonfiguration;
einer Messzykluskonfiguration für die drahtlose Vorrichtung (50);
einer erzielbaren Messleistung oder Zielmessleistung der Messung;
einer Anzahl von Zwischenfrequenzträgern, die von der drahtlosen Vorrichtung (50) parallel zu der Messung verwendet werden; und
der Fähigkeit der drahtlosen Vorrichtung, Messungen auf einer oder mehreren nicht bedienenden Trägerfrequenzen ohne Lücken durchzuführen.

15. Netzknoten (30) nach einem der Ansprüche 12 bis 14, wobei die Verarbeitungsschaltung (52) konfiguriert ist, um den erhaltenen LBT-bezogenen Parameter zu verwenden, um eine Messkonfiguration der drahtlosen Vorrichtung durch eines oder mehrere zu steuern von:
adaptiv zu dem Ergebnis des Erhalteschritts, Konfigurieren der Messbandbreite;
adaptiv zu dem Ergebnis des Erhalteschritts, Konfigurieren der Messperiodizität;
adaptiv zu dem Ergebnis des Erhalteschritts, Konfigurieren der Gesamtmessperiode;
adaptiv zu dem Ergebnis des Erhalteschritts, Konfigurieren der Anzahl von Messabtastwerten oder der Abtastrate; und
adaptiv zu dem Ergebnis des Erhalteschritts, Konfigurieren der Messlücken der drahtlosen Vorrichtung.

## Revendications

1. Procédé, dans un dispositif sans fil (50), de mise en œuvre de mesures radio dans un système sans fil où un ou plusieurs nœuds appliquent des opérations écouter avant de parler (LTB) lors de la transmission sur au moins une porteuse, le procédé comprenant :
l'obtention (502) d'un paramètre se rapportant à LBT pour des mesures radio, dans lequel le paramètre se rapportant à LBT comprend l'un parmi :
une longueur de durée du maintien de canal par le nœud de transmission, en conséquence de LBT, qui permet de transmettre les signaux utilisés pour la mesure ;
une fréquence de LBT ou probabilité de LBT ;
une probabilité de réussite de LBT ou d'échec de LBT ; et
un taux de réussite de LBT ou taux d'échec de LBT ;
la détermination (504) d'un temps de mesure, sur la base du paramètre se rapportant à LBT obtenu pour des mesures radio, dans lequel le temps de mesure est déterminé en calculant le moment de mesure sur la base d'au moins l'une parmi une ou des valeur(s) de paramètre LBT applicable(s) ;
la mise en œuvre (506) d'une mesure radio au cours du temps de mesure déterminé, pour obtenir un résultat de mesure ; et
le rapport (508) du résultat de mesure à un autre nœud, journalisant le résultat de mesure et/ou utilisant le résultat de mesure pour une ou plusieurs tâches opérationnelles dans le dispositif sans fil.

2. Procédé selon la revendication 1, dans lequel le temps de mesure est un temps de mesure maximal.

3. Procédé selon l'une quelconque des revendications 1 ou 2, dans lequel l'obtention d'un paramètre se rapportant à LBT pour des mesures radio comprend l'obtention d'un paramètre se rapportant à LBT sur la base d'un ou plusieurs parmi :
un nombre d'échantillons sans LBT ;
une vitesse de dispositif sans fil ;
une condition ou caractéristique radio ;
une largeur de bande de mesure ;
un état d'activité de dispositif sans fil ;
une périodicité ou durée de périodes d'activité/inactivité ;
une configuration d'intervalle de mesure ;
une configuration de cycle de mesure pour le dispositif sans fil ;
une performance de mesure réalisable ou performance de mesure cible de la mesure ;
un nombre de porteuses inter-fréquences utilisées par le dispositif sans fil en parallèle à la mesure ; et
la capacité du dispositif sans fil à mettre en œuvre des mesures sur une ou plusieurs fréquences de porteuse non de desserte sans intervalles.

4. Procédé, dans un nœud de réseau (30), pour commander un dispositif sans fil mettant en œuvre des mesures radio dans un système sans fil où un ou plusieurs nœuds appliquent des opérations écouter avant de parler (LTB) lors de la transmission sur au moins une porteuse, le procédé comprenant :
l'obtention (302) d'un paramètre se rapportant à LBT pour des mesures radio, dans lequel le paramètre se rapportant à LBT comprend l'un parmi :
une longueur de durée du maintien de canal par le nœud de transmission, en conséquence de LBT, qui permet de transmettre les signaux utilisés pour la mesure ;
une fréquence de LBT ou probabilité de LBT ;
une probabilité de réussite de LBT ou d'échec de LBT ; et
un taux de réussite de LBT ou taux d'échec de LBT ; et
l'utilisation (304) du paramètre se rapportant à LBT obtenu pour mettre en œuvre au moins l'une parmi : la commande d'un temps de mesure de dispositif sans fil ;
la configuration d'au moins un compteur ou un temporisateur associé à la mesure ; la commande d'une configuration de mesure de dispositif sans fil ; et
l'adaptation d'au moins un paramètre de configuration de transmission pour transmettre des signaux à utiliser par le dispositif sans fil pour la mesure.

5. Procédé selon la revendication 4, dans lequel le temps de mesure est un temps de mesure maximal.

6. Procédé selon l'une quelconque des revendications 4 ou 5, dans lequel l'étape d'obtention peut en outre être basée sur un ou plusieurs parmi :
un nombre d'échantillons sans LBT ;
une vitesse de dispositif sans fil ;
une condition ou caractéristique radio ;
une largeur de bande de mesure ;
un état d'activité de dispositif sans fil ;
une périodicité ou durée de périodes d'activité/inactivité ;
une configuration d'intervalle de mesure ;
une configuration de cycle de mesure pour le dispositif sans fil ;
une performance de mesure réalisable ou performance de mesure cible de la mesure ;
un nombre de porteuses inter-fréquences utilisées par le dispositif sans fil en parallèle à la mesure ; et
la capacité du dispositif sans fil à mettre en œuvre des mesures sur une ou plusieurs fréquences de porteuse non de desserte sans intervalles.

7. Procédé selon l'une quelconque des revendications 4 à 6, dans lequel le procédé comprend l'utilisation du paramètre se rapportant à LBT obtenu pour commander une configuration de mesure du dispositif sans fil, dans lequel la commande de la configuration de mesure du dispositif sans fil comprend une ou plusieurs parmi :
de manière adaptative au résultat de l'étape d'obtention, la configuration de la largeur de bande de mesure ;
de manière adaptative au résultat de l'étape d'obtention, la configuration de la périodicité de mesure ;
de manière adaptative au résultat de l'étape d'obtention, la configuration de la période totale de mesure ;
de manière adaptative au résultat de l'étape d'obtention, la configuration du nombre d'échantillons de mesure ou de la fréquence d'échantillonnage ; et
de manière adaptative au résultat de l'étape d'obtention, la configuration des intervalles de mesure de dispositif sans fil.

8. Procédé selon l'une quelconque des revendications 4 à 7, dans lequel le procédé comprend l'utilisation du paramètre se rapportant à LBT obtenu pour adapter au moins un paramètre de configuration de transmission pour transmettre des signaux à utiliser par le dispositif sans fil pour la mesure, dans lequel l'adaptation de l'au moins une configuration de transmission comprend une ou plusieurs parmi :
l'adaptation d'une périodicité de transmission du signal ;
l'adaptation de la largeur de bande de transmission du signal ;
l'adaptation de nombre d'échantillons transmis du signal ;
l'adaptation de la durée de signal de transmission ;
l'adaptation d'une configuration d'antenne pour transmettre le signal ; et
l'adaptation de la fréquence des opérations LBT et/ou du temps de maintien de canal résultant.

9. Dispositif sans fil (50) configuré pour mettre en œuvre des mesures radio dans un système sans fil où un ou plusieurs nœuds appliquent des opérations écouter avant de parler (LTB) lors de la transmission sur au moins une porteuse, le dispositif sans fil (50) comprenant un circuit de traitement (52) configuré pour :
obtenir un paramètre se rapportant à LBT pour des mesures radio, dans lequel le paramètre se rapportant à LBT comprend l'un parmi :
une longueur de durée du maintien de canal par le nœud de transmission, en conséquence de LBT, qui permet de transmettre les signaux utilisés pour la mesure ;
une fréquence de LBT ou probabilité de LBT ;
une probabilité de réussite de LBT ou d'échec de LBT ; et
un taux de réussite de LBT ou taux d'échec de LBT ;
déterminer un temps de mesure, sur la base du paramètre se rapportant à LBT obtenu pour des mesures radio ; dans lequel le temps de mesure est déterminé en calculant le temps de mesure sur la base d'au moins l'une parmi une ou des valeur(s) de paramètre LBT applicable(s) ;
mettre en œuvre une mesure radio au cours du temps de mesure déterminé, pour obtenir un résultat de mesure ; et
rapporter le résultat de mesure à un autre nœud, journalisant le résultat de mesure et/ou utilisant le résultat de mesure pour une ou plusieurs tâches opérationnelles dans le dispositif sans fil (50).

10. Dispositif sans fil (50) selon la revendication 9, dans lequel le temps de mesure est un temps de mesure maximal.

11. Dispositif sans fil (50) selon l'un quelconque parmi la revendication 9 ou 10, dans lequel le circuit de traitement (52) est configuré pour obtenir un paramètre se rapportant à LBT, pour des mesures radio sur la base d'un ou plusieurs parmi :
un nombre d'échantillons sans LBT ;
une vitesse de dispositif sans fil ;
une condition ou caractéristique radio ;
une largeur de bande de mesure ;
un état d'activité de dispositif sans fil ;
une périodicité ou durée de périodes d'activité/inactivité ;
une configuration d'intervalle de mesure ;
une configuration de cycle de mesure pour le dispositif sans fil (50) ;
une performance de mesure réalisable ou performance de mesure cible de la mesure ;
un nombre de porteuses inter-fréquences utilisées par le dispositif sans fil (50) en parallèle à la mesure ; et
la capacité du dispositif sans fil à mettre en œuvre des mesures sur une ou plusieurs fréquences de porteuse non de desserte sans intervalles.

12. Nœud de réseau (30) configuré pour commander un dispositif sans fil (50) mettant en œuvre des mesures radio dans un système sans fil où un ou plusieurs nœuds appliquent des opérations écouter avant de parler (LTB) lors de la transmission sur au moins une porteuse, le nœud de réseau (30) comprenant un circuit de traitement (32) configuré pour :
obtenir un paramètre se rapportant à LBT pour des mesures radio, dans lequel le paramètre se rapportant à LBT comprend l'un parmi :
une longueur de durée du maintien de canal par le nœud de transmission, en conséquence de LBT, qui permet de transmettre les signaux utilisés pour la mesure ;
une fréquence de LBT ou probabilité de LBT ;
une probabilité de réussite de LBT ou d'échec de LBT ; et
un taux de réussite de LBT ou taux d'échec de LBT ; et
utiliser le paramètre se rapportant à LBT obtenu pour mettre en œuvre au moins l'un parmi :
commander un temps de mesure de dispositif sans fil ;
configurer au moins un compteur ou un temporisateur associé à la mesure ;
commander une configuration de mesure de dispositif sans fil ; et
adapter au moins un paramètre de configuration de transmission pour transmettre des signaux à utiliser par le dispositif sans fil (50) pour la mesure.

13. Nœud de réseau (30) selon la revendication 12, dans lequel le temps de mesure est un temps de mesure maximal.

14. Nœud de réseau (30) selon l'un quelconque parmi la revendication 12 ou 13, dans lequel le circuit de traitement (52) est configuré pour obtenir un paramètre se rapportant à LBT, pour des mesures radio sur la base d'un ou plusieurs parmi :
un nombre d'échantillons sans LBT ;
une vitesse de dispositif sans fil ;
une condition ou caractéristique radio ;
une largeur de bande de mesure ;
un état d'activité de dispositif sans fil ;
une périodicité ou durée de périodes d'activité/inactivité ;
une configuration d'intervalle de mesure ;
une configuration de cycle de mesure pour le dispositif sans fil (50) ;
une performance de mesure réalisable ou performance de mesure cible de la mesure ;
un nombre de porteuses inter-fréquences utilisées par le dispositif sans fil (50) en parallèle à la mesure ; et
la capacité du dispositif sans fil à mettre en œuvre des mesures sur une ou plusieurs fréquences de porteuse non de desserte sans intervalles.

15. Nœud de réseau (30) selon l'une quelconque des revendications 12 à 14, dans lequel le circuit de traitement (52) est configuré pour utiliser le paramètre se rapportant à LBT obtenu pour commander une configuration de mesure du dispositif sans fil par une ou plusieurs parmi :
de manière adaptative au résultat de l'étape d'obtention, la configuration de la largeur de bande de mesure ;
de manière adaptative au résultat de l'étape d'obtention, la configuration de la périodicité de mesure ;
de manière adaptative au résultat de l'étape d'obtention, la configuration de la période totale de mesure ;
de manière adaptative au résultat de l'étape d'obtention, la configuration du nombre d'échantillons de mesure ou de la fréquence d'échantillonnage ; et
de manière adaptative au résultat de l'étape d'obtention, la configuration des intervalles de mesure de dispositif sans fil.
